(19) Europäisches Patentamt / European Patent Office / Office européen des brevets

(11) **EP 4 612 852 B1**

(12) **EUROPÄISCHE PATENTSCHRIFT**

(45) Veröffentlichungstag und Bekanntmachung des Hinweises auf die Patenterteilung:
**19.11.2025 Patentblatt 2025/47**

(21) Anmeldenummer: **23833709.1**

(22) Anmeldetag: **15.12.2023**

(51) Internationale Patentklassifikation (IPC):
*H04L 9/40* (2022.01)   *H04L 41/12* (2022.01)
*H04L 43/16* (2022.01)   *H04L 67/12* (2022.01)
*H04L 43/0852* (2022.01)

(52) Gemeinsame Patentklassifikation (CPC):
**H04L 63/1425; H04L 41/12; H04L 43/0852;**
**H04L 43/16; H04L 67/12**

(86) Internationale Anmeldenummer:
**PCT/EP2023/086161**

(87) Internationale Veröffentlichungsnummer:
**WO 2024/132970 (27.06.2024 Gazette 2024/26)**

(54) **ÜBERWACHUNGSVERFAHREN FÜR EIN INDUSTRIELLES NETZWERK**

MONITORING METHOD FOR AN INDUSTRIAL NETWORK

PROCÉDÉ DE SURVEILLANCE POUR UN RÉSEAU INDUSTRIEL

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **22.12.2022 DE 102022134520**

(43) Veröffentlichungstag der Anmeldung:
**10.09.2025 Patentblatt 2025/37**

(73) Patentinhaber: **Beckhoff Automation GmbH**
**33415 Verl (DE)**

(72) Erfinder:
• **RETTIG, Thomas**
  **33378 Rheda-Wiedenbrück (DE)**
• **ROSTAN, Martin**
  **90482 Nürnberg (DE)**

(74) Vertreter: **Patentanwaltskanzlei WILHELM & BECK**
**Prinzenstraße 13**
**80639 München (DE)**

(56) Entgegenhaltungen:
**EP-A1- 3 734 930    DE-B4- 102012 216 689**
**US-B2- 11 165 802**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Erkennen einer Änderung in einer Topologie eines industriellen Netzwerkes.

Bei industriellen Netzwerken stellen Netzknoten, die ohne Wissen des Netzwerkmanagements nachträglich eingefügt werden, eine potenzielle Cyber-Security-Gefährdung dar. Die nachträglich eingefügten Netzknoten könnten nämlich beispielsweise dazu dienen, den Datenverkehr zu verfälschen oder zu stören. Es ist deshalb notwendig, zuverlässig zu erkennen, ob nach Abschluss der Netzwerkkonfiguration weitere Netzknoten hinzugefügt worden sind. Dies gilt sowohl für den laufenden Betrieb als auch für eine Betriebspause, in der das industrielle Netzwerk abgeschaltet ist.

US 11 165 802 B2 und EP 3 734 930 A1 offenbaren Verfahren zum Erkennen eines Angriffes bzw. einer Anomalie in einem industriellen Netzwerk durch Überwachen der Laufzeit von Nachrichten im industriellen Netzwerk und Feststellen von Laufzeitänderungen.

Aufgabe der Erfindung ist es, einen verbesserten Schutz gegen einen nachträglich hinzugefügten Netzknoten in einem industriellen Netzwerk bereitzustellen.

Die Aufgabe wird durch ein Verfahren nach Anspruch 1 gelöst. Bevorzugte Weiterbildungen sind in den abhängigen Ansprüchen angegeben.

Bei einem Verfahren zum Erkennen einer Änderung in einer Topologie eines industriellen Netzwerkes, das aus einer Anordnung von Netzknoten besteht, die miteinander verbunden sind, wird von wenigstens einem Netzknoten die Laufzeit von Nachrichten im industriellen Netzwerk ermittelt. Wenn die ermittelte Laufzeit oder eine Laufzeitänderung einen vorgegebenen Schwellenwert überschreitet, wird das als Hinweis auf einen nachträglich in die Netzwerktopologie eingefügten Netzknoten gewertet und ein Sicherheitsmodus wird aktiviert.

Mithilfe der Laufzeitüberwachung im industriellen Netzwerk kann zuverlässig ein nachträglich hinzugefügter Netzknoten festgestellt und eine entsprechende Schutzmaßnahme durch Aktivieren eines Sicherheitsmodus eingeleitet werden.

Es kann ein Laufzeit-Überwachungsnetzknoten vorgesehen sein, der die ermittelte Laufzeit aus dem Netzknoten ausliest und bestimmt, ob die ausgelesene Laufzeit den vorgegebenen Schwellenwert überschreitet. Der Laufzeit-Überwachungsnetzknoten ist vorzugsweise ein Steuerknoten im industriellen Netzwerk, der einen Datentransfer im industriellen Netzwerk bestimmt.

Die Überwachung der Cyber-Security-Gefährdung im industriellen Netzwerk kann so zentral und über den Laufzeit-Überwachungsnetzknoten angepasst an die jeweilige Netzwerkauslegung erfolgen.

Weiter kann vorgesehen sein, dass eine Mehrzahl von Netzknoten Laufzeitmessungen durchführt und der Laufzeit-Überwachungsnetzknoten die Laufzeitmessungen der einzelnen Netzknoten miteinander in Beziehung zu setzen, um eine Laufzeit-Matrix zu erstellen. Der Laufzeit-Überwachungsnetzknoten kann durch entsprechende Auswertung der so erzeugten Laufzeit-Matrix erkennen, ob und wo ein oder mehrere zusätzliche Netzknoten eingefügt wurden.

Der Sicherheitsmodus kann eine Warninformation umfassen, die quittiert werden kann, um den Sicherheitsmodus zu beenden.

So kann sichergestellt werden, dass der Bediener über den Status der Cyber-Security-Gefährdung im industriellen Netzwerk informiert wird und eine fehlerhafte Sicherheitsmodus-Aktivierung beispielsweise dann, wenn eine gewollte Änderung der Netzwerktopologie als nachträgliches Einfügen eines Netzknotens gewertet wird, wieder deaktiviert werden kann.

Der Schwellenwert kann mit einem Umgebungsparameter, insbesondere der Umgebungstemperatur korreliert werden. Der Schwellenwert kann auch mit einem Betriebsparameter, insbesondere einer Betriebszeit korreliert werden.

Durch das Korrelieren des Schwellenwertes mit Umgebungs- beziehungsweise Betriebsparametern des industriellen Netzwerkes kann die Zuverlässigkeit der Überwachung der Cyber-Security-Gefährdung im industriellen Netzwerk erhöht werden. Insbesondere kann gewährleistet werden, dass die Anzahl von fehlerhaften Sicherheitsmodus-Aktivierungen reduziert wird.

Der Netzknoten zum Bestimmen der Laufzeit kann ein erster Netzknoten sein, der die Laufzeit der Nachrichten zu einem verbundenen zweiten Netzknoten mithilfe des Precision Time Protocol misst.

Mit dieser Vorgehensweise kann die Laufzeit zwischen zwei benachbarten Netzknoten fortlaufend ermittelt werden. Durch sich ändernde Umwelteinflüsse insbesondere Umgebungs- und Bauteile-Temperatur hervorgerufene Änderungen der ermittelten Laufzeit bleiben in der Regel unterhalb des Schwellenwertes, wodurch eine zuverlässige Überwachung erreicht wird.

Zum Bestimmen der Laufzeit der Netzknoten wird die Zeit zwischen dem Aussenden einer Nachricht und der Rückkehr der Nachricht gemessen.

Dabei kann der Netzknoten, der die Zeit zwischen dem Aussenden einer Nachricht und der Rückkehr der Nachricht misst, der erste Netzknoten nach dem Steuerknoten in der Netzwerktopologie sein.

Ferner wird für eine Mehrzahl von Netzknoten jeweils die Zeit zwischen dem Aussenden einer Nachricht und der Rückkehr der Nachricht gemessen, wobei die Mehrzahl abhängig von den Betriebsbedingungen des industriellen Netzwerkes bestimmt wird.

Bei industriellen Netzwerken, bei denen die versandten Nachrichten im Durchlauf von den Netzknoten verarbeitet werden, kann so eine vereinfachte Zeitmessung erfolgen, die auf die optimal auf die jeweilige Netzwerktopologie abgestimmt werden kann.

Die Erfindung wird im Folgenden anhand von Figuren näher erläutert. Dabei zeigen:

> Figur 1 zeigt in schematischer Darstellung ein Ethernet-basiertes industrielles Netzwerk 1; und

> Figur 2 zeigt ein Verfahren zur Laufzeitmessung zwischen zwei Netzknoten in dem in Figur 1 gezeigten industriellen Netzwerk.

In der Fertigungs- und Prozessautomatisierung werden industriellen Netzwerke eingesetzt, bei denen die dezentral angeordneten Geräte einer Maschinenperipherie wie E/A-Module, Messumformer, Antriebe, Ventile und Bedienerterminals über ein leistungsfähiges Kommunikationssystem mit Automatisierungs-, Engineering- oder Visualisierungssystemen kommunizieren.

Die aktiven Teilnehmer in den industriellen Netzwerken sind die Automatisierungs-, Engineering- oder Visualisierungssysteme, die im Weiteren als Steuerknoten bezeichnet werden. Sie sind in der Regel im Besitz einer Netzwerk-Zugriffsberechtigung, senden die Steuerungs- oder auch Ausgangsdaten und überwachen den Datentransfer im industriellen Netzwerk und den Netzwerkstatus. Die Maschinenperipherie-Geräte sind die Empfänger der Steuerungsdaten in den industriellen Netzwerken und werden im Weiteren als Netzknoten bezeichnet. Sie quittieren empfangene Nachrichten und senden selbstständig oder auf Anfrage eines Steuerknotens Nachrichten mit Sensor- und Statusdaten, auch Eingangsdaten genannt.

In der Automatisierungstechnik werden industrielle Netzwerke mit unterschiedlichsten Übertragungsregeln eingesetzt. Bei zyklischen industriellen Netzwerken werden die Daten regelmäßig und fortlaufend übertragen, unabhängig davon, ob eine Änderung der Daten stattgefunden hat. Bei azyklischen industriellen Netzwerken dagegen werden die Daten nur dann übertragen, wenn eine Änderung der Daten stattgefunden hat oder wenn die Datenübertragung explizit vom Steuerknoten angestoßen wird.

Unterschieden wird weiterhin auch zwischen stationsorientierten industriellen Netzwerken, bei denen ein Steuerknoten eine Nachricht an einen Netzknoten sendet, die der Netzknoten dann quittiert oder beantwortet, und nachrichtenorientierten Industriellen Netzwerken, die sich dadurch auszeichnen, dass der Steuerknoten unbestätigte Nachrichten ausgibt, die dann von allen Netzknoten verarbeitet werden können. Weiterhin werden busorientierte industrielle Netzwerke eingesetzt, bei denen der Steuerknoten mit einer Nachricht sämtliche Daten für alle angeschlossenen Netzknoten überträgt, wobei die Stelle der Daten für den jeweiligen Netzknoten durch deren Position im Nachrichtenblock festgelegt ist.

Da im industriellen Umfeld die Netzwerkverbindung häufig von Gerät zu Gerät in einer Reihung erfolgt, werden industrielle Netzwerke oftmals ausgehend von einem Steuerknoten als Ring aus Netzknoten realisiert. Industrielle Netzwerke haben dabei in der Regel eine bidirektionale Verbindungsstruktur zwischen den Netzknoten, d.h. eine Datenübertragung zwischen zwei Netzknoten ist in beide Richtungen möglich.

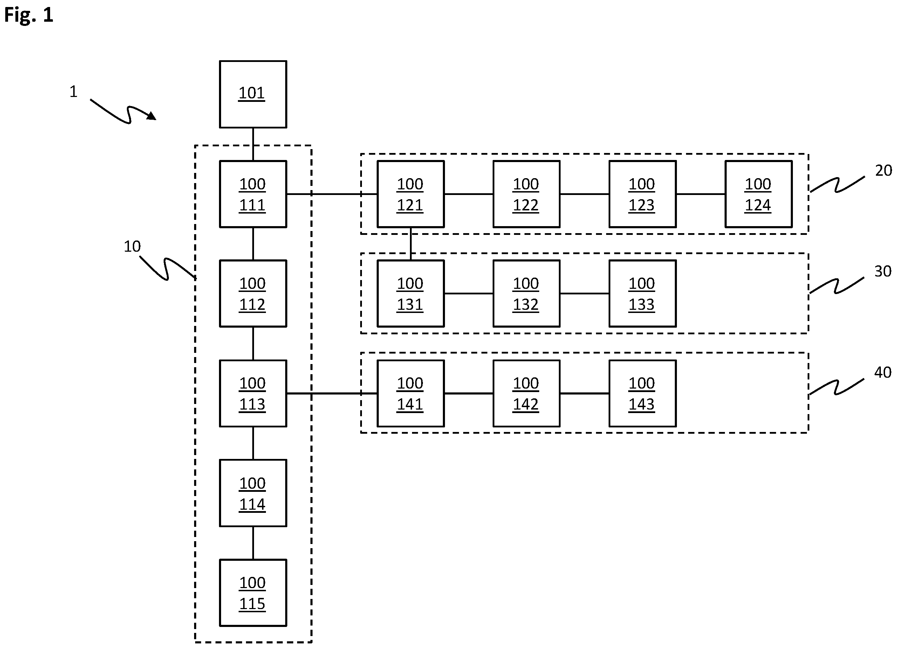

Figur 1 zeigt in schematischer Darstellung beispielhaft ein Ethernet-basiertes industrielles Netzwerk 1. Das industrielle Netzwerk 1 ist dabei in mehrere Segmente unterteilt und weist ein erstes Segment 10, ein zweites Segment 20 und ein drittes Segment 30 und ein viertes Segment 40 auf. Jedes Segment umfasst mehrere Netzknoten 100 auf.

Das erste Segment 10 umfasst einen ersten Netzknoten 111, einen zweiten Netzknoten 112, einen dritten Netzknoten 113, einen vierten Netzknoten 114 und einen fünften Netzknoten 115 auf.

Das zweite Segment 20 weist einen sechsten Netzknoten 121, einen siebten Netzknoten 122, einen achten Netzknoten 123 und einen neunten Netzknoten 124 auf.

Das dritte Segment 30 umfasst einen zehnten Netzknoten 131, einen elften Netzknoten 132 und einen zwölften Netzknoten 133 auf.

Das vierte Segment 40 weist einen dreizehnten Netzknoten 141, einen vierzehnten Netzknoten 142 und einen fünfzehnten Netzknoten 143 auf.

Die Netzknoten in den verschiedenen Segmenten sind jeweils über eine bidirektionale Verbindungsstruktur miteinander verbunden. Die Netzknoten weisen jeweils mindestens zwei Schnittstellen, die auch als Ports bezeichnet werden, auf, die jeweils als kombinierter Dateneingang und Datenausgang, auch als Transceiver bezeichnet, ausgebildet sind.

Der erste Netzknoten 111 des ersten Segments 10 ist ferner als erster Netzwerkverteiler ausgebildet und verbindet das erste Segment 10 mit dem zweiten Segment 20. Hierzu weist der erste Netzknoten 111 eine zusätzliche dritte Schnittstelle auf, der den ersten Netzknoten 111 des ersten Segments 10 mit dem sechsten Netzknoten 121 des zweiten Segments 20 verbindet.

Der dritte Netzknoten 113 des ersten Segments 10 ist als zweiter Netzwerkverteiler ausgebildet, der über eine zusätzliche dritte Schnittstelle den dritten Netzknoten 113 des ersten Segments 10 mit dem dreizehnten Netzknoten 141 des vierten Segments 40 verbindet.

Der sechste Netzknoten 121 des zweiten Segments 20 ist als dritter Netzwerkverteiler ausgebildet. Der dritte Netzwerkverteiler weist eine weitere dritte Schnittstelle auf, über die eine Verbindung zwischen dem sechsten Netzknoten 121 des zweiten Segments 20 und dem zehnten Netzknoten 131 des dritten Segments 30 hergestellt wird.

Damit weist das in Figur 1 dargestellte Netzwerk 1 eine Struktur auf, in der das zweite Segment 20 und das vierte Segment 40 an das erste Segment 10 angekoppelt und dem ersten Segment 10 damit nachgelagert sind. Das dritte Segment 30 ist an das zweite Segment 20 angekoppelt und damit dem zweiten Segment 20 nachgelagert.

Zusätzlich zu den in den Segmenten angeordneten Netzknoten 100 weist das industrielle Netzwerk 1 einen Steuerknoten 101 auf, der den Segmenten vorgeschaltet und der mit dem als erster Netzwerkverteiler ausgebildeten ersten Netzknoten 111 des ersten Segments 10 verbunden ist.

Im gesamten industriellen Netzwerk kann eine einheitliche Übertragungsrate verwendet werden. Die Netzknoten 100 in den verschiedenen Segmenten können aber auch jeweils mit unterschiedlichen Übertragungsraten miteinander kommunizieren.

Bei industriellen Netzwerken wird die Netzwerktopologie, d.h. die physikalische Abfolge und die Anordnung der Netzknoten im Netzwerk mithilfe eines Konfigurationstools entweder manuell durch Auswahl der Netzknoten aus einer Liste und anschließendes Einfügen an der jeweiligen Position oder automatisch durch Abtasten des bereits vorhandenen Netzwerkes bestimmt. Nach dem Ermitteln der Netzwerktopologie werden die anwendungsspezifischen Parameter der jeweiligen Netzknoten konfiguriert, ferner die Prozessdaten, d.h. die Ein- und Ausgangsdaten festgelegt und mit den Prozessvariablen des Steuerknotens verknüpft sowie die Abfragefrequenz bzw. Zykluszeit eingestellt.

Netzknoten, die ohne Wissen des Netzwerkmanagements nachträglich in das industrielle Netzwerk eingefügt werden, stellen eine potenzielle Cyber-Security Gefährdung dar. Die nachträglich eingefügten Netzknoten könnten nämlich beispielsweise dazu dienen, den Datenverkehr zu verfälschen oder zu stören. Es ist deshalb notwendig, zuverlässig zu erkennen, ob nach Abschluss der Netzwerkkonfiguration weitere Netzknoten eingefügt worden sind. Dies gilt sowohl für den laufenden Betrieb als auch für eine Betriebspause, in der das industrielle Netzwerk abgeschaltet ist.

Eine Änderung in der Netzwerktopologie kann festgestellt werden, indem ein Netzknoten die Laufzeiten von Nachrichten im industriellen Netzwerk ermittelt, wobei, wenn die ermittelte Laufzeit oder eine Laufzeitänderung einen vorgegebenen Schwellenwert überschreitet, das als Hinweis auf einen zusätzlich in die Netzwerktopologie eingefügten Netzknoten gewertet und ein Sicherheitsmodus aktiviert wird.

Der Sicherheitsmodus kann beispielsweise ein veränderter Datenverkehr, beispielsweise ein eingeschränkter Prozessdatenaustausch sein, um eine Korrumpierbarkeit der Prozessdaten zu verhindern. Der Sicherheitsmodus kann auch eine Warninformation an den Bediener umfassen, die vom Bediener quittiert werden kann, um den Sicherheitsmodus zu beenden, wenn er beispielsweise feststellt, dass kein zusätzlicher Netzknoten ungewünscht eingefügt wurde und es sich deshalb um einen Fehlalarm gehandelt hat.

In vielen industriellen Netzwerken wird eine in der Regel als Ethernet-Frame (gemäß IEEE 802.3) vom Steuerknoten versandte Nachricht von jedem Netzknoten zunächst empfangen und dann interpretiert. Anschließend wird die Nachricht vom Netzknoten weiterversandt.

Bei solchen industriellen Netzwerken kann eine Laufzeitmessung mithilfe von Zeitstempeln in den zwischen den Netzknoten ausgetauschten Nachrichten erfolgen. Als Zeitstempel wird dabei der Zeitpunkt eines Ereignisses durch hardwareimplementiertes Auslesen einer hochauflösenden Systemuhr im Netzknoten zum Ereigniszeitpunkt verwendet. Um die Laufzeit einer Nachricht zwischen einem Netzknoten und einem benachbarten Netzknoten zu bestimmen, wird in den Netzknoten der Zeitstempel von versandten und eingehenden Nachrichten ausgewertet. Hierfür wird insbesondere das in der Norm IEEE 1588 bzw. IEC 61588 definierte Precision Time Protocol (PTP) sowie das im Time-Sensitive Networking (TSN) daraus abgeleitete IEEE Protokoll P802.1AS-Rev und dessen Weiterentwicklung eingesetzt.

Dabei sind zwei Vorgehensweisen bei der Laufzeitmessung möglich. Falls der Netzknoten durch geeignete Hard- und Software in der Lage ist, Nachrichten exakt zu einem vorher festgelegten Zeitpunkt zu versenden, kann der Sendezeitpunkt als Zeitstempel in der jeweiligen Nachricht mitgeschickt werden. Andernfalls wird der tatsächliche Sendezeitpunkt des Netzknotens durch einen im Netzknoten zwischen gespeicherten Sende-Zeitstempel festgehalten. Der im Netzknoten zwischengespeicherte Sende-Zeitstempel wird dann von dem Netzknoten in einer nachfolgenden Nachricht mitversandt.

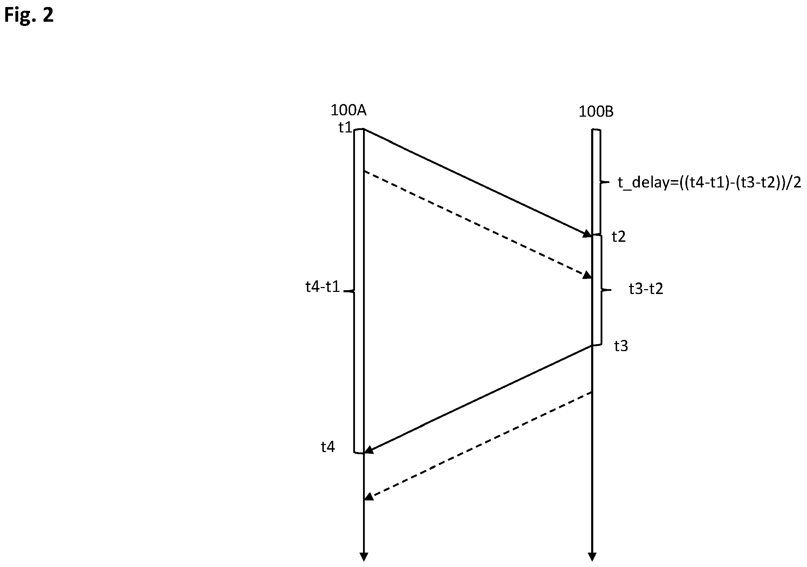

Figur 2 zeigt eine Laufzeitmessung zwischen einem ersten Netzknoten 100A und einem zweiten Netzknoten 100B in dem in Figur 1 gezeigten industriellen Netzwerk 1. Die Netzknoten sind dabei so ausgelegt, dass eine Nachricht vom jedem Netzknoten zunächst empfangen, dann interpretiert und anschließend weiterversandt wird.

Der erste Netzknoten 100A sendet zu einem ersten Sendezeitpunkt t1 eine erste Nachricht N1 an den zweiten Netzknoten 100B, der die erste Nachricht zu einem zweiten Empfangszeitpunkt t2 empfängt. Der erste Sendezeitpunkt t1 und der zweite Empfangszeitpunkt t2 werden durch einen entsprechende ersten Sende-Zeitstempel im ersten Netzknoten 100A bzw. einen zweiten Empfangs-Zeitstempel im zweiten Netzknoten 100B festgehalten.

Als Antwort sendet der zweite Netzknoten 100B dann zu einem dritten Sendezeitpunkt t3 eine zweite Nachricht N2 an den ersten Netzknoten 100A zurück, der die zweite Nachricht N2 zum vierten Empfangszeitpunkt t4 erhält. Der dritte Sendezeitpunkt t3 und der vierte Empfangszeitpunkt t4 werden wiederum durch einen entsprechenden dritten Sende-Zeitstempel im zweiten Netzknoten 100B bzw. vierten Empfangs-Zeitstempel im ersten Netzknoten 100A festgehalten.

Der zweite Netzknoten 100B kann dabei den zweiten Empfangszeitpunkt t2 und den dritten Sendezeitpunkt t3 beziehungsweise den zweiten Empfangszeitpunkt t2 und die Zeitdifferenz zwischen dem dritten Sendezeitpunkt t3 und dem zweiten Empfangszeitpunkt t2 entweder mit der zweiten Nachricht selbst oder als Option, wie durch die gestrichelte Linie in Figur 1 angezeigt ist, mit einer später versandten weiteren Nachricht an den ersten Netzknoten 100A übermittelt.

Die Laufzeit t_delay zwischen dem ersten Netzknoten 100A und dem zweiten Netzknoten 100B bestimmt der erste Netzknoten 100A dann wie folgt:

$$t\_delay=(t4-t1)-(t3-t2))/2.$$

Der Laufzeitbestimmung liegt dabei die Annahme zugrunde, dass der Hinweg vom ersten Netzknoten 100A zum zweiten Netzknoten 100B und der Rückweg vom zweiten Netzknoten 100B zum ersten Netzknoten 100A die gleiche mittlere Laufzeit haben, die sich nur langsam ändern. Die Laufzeit beinhaltet dabei nicht nur die Laufzeit auf den Verbindungsstrecken zwischen dem ersten Netzknoten 100A und dem zweiten Netzknoten 100B, sondern auch die Verzögerung in den Transceivern der beiden Netzknoten, die aber als konstant angenommen werden kann.

Auf eine alternative Weise kann die Laufzeitbestimmung bei industriellen Netzwerken erfolgen, bei denen die Netzknoten die in der Regel als Ethernet-Frame (gemäß IEEE 802.3) versandten Nachrichten im Durchlauf verarbeiten. Der Netzknoten entnimmt aus den empfangenden Nachrichten die für den jeweiligen Netzknoten bestimmten Ausgangsdaten, während die Nachricht den Netzknoten durchläuft. Ebenso werden Eingangsdaten vom Netzknoten im Durchlauf in die Nachricht eingefügt. Dabei wird die Nachricht nicht erst vollständig empfangen, bevor die Nachricht verarbeitet wird, sondern mit der Bearbeitung wird bereits nach Empfang der Steuerdaten in der Nachricht begonnen. Das Versenden erfolgt dann auch jeweils mit einem minimalen Versatz von wenigen Bit-Zeiten.

In solchen industriellen Netzwerken, die logisch als Ring aus Netzknoten organisiert sind, wird jeder Netzknoten, der nicht am Ende der bidirektionale Verbindungsstruktur angeschlossen ist, zweimal von der Nachricht durchlaufen.

Bei dem in Figur 1 gezeigten industriellen Netzwerk 1, bei dem der erste Netzknoten 111 des ersten Segments 10 als erster Netzwerkverteiler, der dritte Netzknoten 113 des ersten Segments 10 als zweiter Netzwerkverteiler und der sechste Netzknoten 121 des zweiten Segments 20 ist als dritter Netzwerkverteiler ausgebildet sind, sodass das zweite Segment 20 und das vierte Segment 40 an das erste Segment 10 angekoppelt und dem ersten Segment 10 nachgelagert sind und das dritte Segment 30 an das zweite Segment 20 angekoppelt und dem zweiten Segment 20 nachgelagert ist, ergibt sich folgende Durchlauf-Reihenfolge für eine Nachricht.

Ausgehend vom Steuerknoten 101 geht die Nachricht ins erste Segment 10 zum ersten Netzknoten 111, dann ins zweite Segment 20 zum sechsten Netzknoten 121, zum siebten Netzknoten 122, zum achten Netzknoten 123, zum neunten Netzknoten 124, zurück zum achten Netzknoten 123, zum siebten Netzknoten 122, zum sechsten Netzknoten 121, ins dritte Segment 30 zum zehnten Netzknoten 131, zum elften Netzknoten 132, zum zwölften Netzknoten 133, zurück zum elften Netzknoten 132, zum zehnten Netzknoten 131, zum sechsten Netzknoten 121, zum ersten Netzknoten 111, dann im ersten Segment 10 zum zweiten Netzknoten 112, zum dritten Netzknoten 113, dann ins vierte Segment 40 zum dreizehnten Netzknoten 141, zum vierzehnten Netzknoten 142, zum fünfzehnten Netzknoten 143, zurück zum vierzehnten Netzknoten 142, zum dreizehnten Netzknoten 141, zum dritten Netzknoten 113, dann weiter zum vierten Netzknoten 114, zum fünften Netzknoten 115, dann zurück zum vierten Netzknoten 114, zum dritten Netzknoten 113, zum zweiten Netzknoten 112, zum ersten Netzknoten 111, und dann zum Steuerknoten 101.

Die einzelnen Netzknoten haben in der Regel die Fähigkeit, die Zeit zwischen einer ausgehenden und rückkehrenden Nachricht, im Folgenden Return-Zeit genannt, an jedem Port hochgenau zu messen. Das kann mithilfe von Zeitstempeln erfolgen, die in dem Netzknoten der Nachricht beim Senden beziehungsweise beim Empfangen zugeordnet werden. Als Zeitstempel wird dabei der Zeitpunkt des Sende- beziehungsweise des Empfangsereignisses durch hardwareimplementiertes Auslesen der hochauflösenden Systemuhr im Netzknoten zum jeweiligen Ereigniszeitpunkt verwendet.

Die Laufzeitmessung kann in dem in Figur 1 gezeigten industriellen Netzwerk so erfolgen, dass die Netzknoten 100 die Return-Zeit einer vom Steuerknoten 101 versandten speziellen Nachricht an allen Ports ermitteln und in vom Steuerknoten auslesbare Speicherregister im Netzknoten eintragen. Der Steuerknoten 101 liest nach dem Umlauf der Nachricht durch die Segmente mithilfe weiterer Nachrichten die Empfangszeitpunkte oder die Return-Zeit aus den Speicherregistern der Netzknoten aus und kann daraus die Laufzeiten zwischen den einzelnen Netzknoten 100 ermitteln.

Wenn beispielsweise der siebte Netzknoten 122 in dem zweiten Segment 20 in dem in Figur 1 gezeigten industriellen Netzwerk 1 einen ersten Empfangszeitpunkt t1 auf dem Hinweg und einen vierten Empfangszeitpunkt t4 auf dem Rückweg und der achte Netzknoten 123 in dem zweiten Segment 20 einen zweiten Empfangszeitpunkt t2 auf dem Hinweg und einen dritten Empfangszeitpunkt t3 auf dem Rückweg ermittelt hat, bestimmt der Steuerknoten 101 die Laufzeit t_delay zwischen dem siebten Netzknoten 122 und dem achten Netzknoten 123 dann wie folgt:

$$t\_delay=(t4-t1)-(t3-t2))/2.$$

Der Laufzeitbestimmung liegt dabei wieder die Annahme zugrunde, dass der Hinweg vom siebten Netzknoten 122 zum achten Netzknoten 123 und der Rückweg vom achten Netzknoten 123 zum siebten Netzknoten 122 die gleiche mittlere Laufzeit haben, die sich nur langsam ändern. Die Laufzeit beinhaltet dabei nicht nur die Laufzeit auf den Verbindungsstrecken zwischen dem siebten Netzknoten 122 und dem achten Netzknoten 123, sondern auch die Durchlaufverzögerung in den beiden Netzknoten, die aber als konstant angenommen werden kann.

Da bei dem in Figur 1 dargestellte industriellen Netzwerk 1, wie vorstehend erläutert, die an einem Port eines Netzknotens angeschlossenen Netzknoten alle von den Nachrichten durchlaufen werden, kann die Laufzeitmessung so erfolgen, dass alle Netzknoten die Return-Zeit durch alle nachgelagerten Netzknoten ermitteln.

Der erste Netzknoten 111 erhält die Nachricht vom Steuerknoten 101 an seinem ersten Port und leitet sie durch seinen zweiten Port weiter ins zweite Segment 20, die vom zweiten Segment 20 zurückkehrende Nachricht wird am dritten Port des Netzknotens 111 ins erste Segment 10 weitergeleitet, und die vom ersten Segment 10 zurückkehrende Nachricht wird durch den ersten Port zurück zum Steuerknoten 101 geleitet.

Die Return-Zeit am zweiten Port des ersten Netzknotens 111 entspricht also der Laufzeit vom ersten Netzknoten 111 durch den sechsten Netzknoten 121, den siebten Netzknoten 122, den achten Netzknoten 123, den neunten Netzknoten 124, den achten Netzknoten 123, den siebten Netzknoten 122, den sechsten Netzknoten 121, den zehnten Netzknoten 131, den elften Netzknoten 132, den zwölften Netzknoten 133, den elften Netzknoten 132, den zehnten Netzknoten 131, und den sechsten Netzknoten 121.

Die Return-Zeit am dritten Port des ersten Netzknotens 111 entspricht also der Laufzeit vom ersten Netzknoten 111 durch den zweiten Netzknoten 112, den vierten Netzknoten 113, den dreizehnten Netzknoten 141, den vierzehnten Netzknoten 142, den fünfzehnten Netzknoten 143, den vierzehnten Netzknoten 142, den dreizehnten Netzknoten 141, den dritten Netzknoten 113, den vierten Netzknoten 114, den fünften Netzknoten 115, den vierten Netzknoten 114, den dritten Netzknoten 113, und den zweiten Netzknoten 112.

Die Laufzeit ist bei industriellen Netzwerken, bei den die Nachricht im Durchlauf verarbeitet wird, auch über mehrere Netzknoten hinweggesehen eine reine Hardware-Eigenschaft, die zwar von der Länge der Verbindungsleitungen und der Anzahl und Beschaffenheit der Netzknoten abhängt, nicht aber von deren konkreter Aufgabe im Kommunikationszyklus. Es ist für die Laufzeit unerheblich, ob der Netzknoten die Nachricht nur durchleitet oder ob der Netzknoten die Nachricht verarbeitet, also Ausgangsdaten aus der Nachricht ausliest oder Eingangsdaten in die Nachricht einschreibt.

In den industriellen Netzwerken kann ein Laufzeit-Überwachungsnetzknoten vorgesehen sein, der die Laufzeiten zwischen den Netzknoten im Netzwerk aus den jeweiligen Netzknoten, die die Laufzeitmessungen durchführen, ausliest und abspeichert. Der Laufzeit-Überwachungsnetzknoten kann beispielsweise der Steuerknoten 101 des in Figur 1 gezeigten industriellen Netzwerkes 1 sein.

Wenn die Laufzeit zwischen zwei benachbarten Netzknoten fortlaufend ermittelt wird, bleiben Änderungen der ermittelten Laufzeit durch sich ändernde Umwelteinflüsse, insbesondere Umgebungs- und Bauteile-Temperatur in der Regel unterhalb des Schwellenwertes. Ein Netzknotentausch hingegen könnte zu einer Schwellenwertüberschreitung und damit einer Warnung führen. Ein Netzknoten-Tausch muss deshalb entsprechend quittiert werden.

Der Schwellenwert kann so festgelegt werden, dass der Schwellenwert der erwarteten Laufzeit auf der Leitung zwischen den zwei benachbarten Netzknoten und der Transceiver-Verzögerung in den beiden Netzknoten addiert um einen Toleranzwert, der mögliche temperaturbedingten und betriebsbedingte Änderungen berücksichtigt entspricht. Eine zusätzliche Verlängerung der Laufzeit durch die Nachrichtenverarbeitung und -durchleitung in einem nachträglich zwischen den beiden Netzknoten eingefügten weiteren Netzknoten, die um ein Vielfaches höher ist als die Leitungslaufzeit und Transceiver-Verzögerung, würde einen solchen Schwellwert immer überschreiten und so erkannt werden.

Bei industriellen Netzwerken, bei denen die Laufzeiten aus der Return-Zeit des dem Steuerknoten ersten nachgeordneten Netzknoten bestimmt werden, kann bei großen Netzwerken mit vielen Netzknoten aufgrund von Bauteile-Streuung und Alterungsprozessen der angeschlossenen Netzknoten keinen direkten Rückschluss auf die genaue Anzahl der Netzknoten vorgenommen werden. Auch kann sich aufgrund von Umwelteinflüssen insbesondere der Umgebungs- und Bauteile-Temperatur im laufenden Betrieb die Laufzeit ändert. Bei großen Netzwerken mit vielen Netzknoten sind diese systembedingten Änderungen der Return-Zeit des gesamten Netzwerkes oft größer als der Einfluss durch einen weiteren, nachträglich eingefügten Netzknoten.

Typische Durchleitungsverzögerungen bei Netzknoten liegen je Hardware-Ausprägung im Bereich von 1000ns bis 1500ns (Hin- und Rückrichtung), und unterliegen typischen temperaturbedingten Änderungen im Bereich von 1-2%. Die Laufzeit auf der Leitung beträgt je nach Ausprägung des Kabels ca. 5 bis 6 ns/m und ändert sich nicht signifikant mit der Temperatur.

Deshalb genügt die Messung durch einen einzelnen Netzknoten, der dem Steuerknoten nachgeordnet ist, in der Regel nur in kleinen industriellen Netzwerken mit wenigen Netzknoten. Bei kleinen Netzwerken beispielsweise von weniger als 20 Netzknoten, ist die Änderung der Return-Zeit durch sich ändernde Umwelteinflüsse beispielsweise durch Abkühlung in Betriebspausen klein im Vergleich zur Zunahme der Laufzeit durch einen nachträglich eingefügten Netzknoten. Hier genügt es dann, die Return-Zeit an der Ausgangsschnittstelle des ersten Netzknotens nach dem Steuerknoten zu überwachen.

Bei großen industriellen Netzwerken mit beispielsweise mehr als 20 Netzknoten dagegen muss die Return-Zeit dann von mehreren Netzknoten, beispielsweise von jedem zwanzigsten Netzknoten im industriellen Netzwerk überwacht werden.

Als Netzknoten zur Laufzeitbestimmung können dabei die Netzwerkverteiler eingesetzt werden. Bei dem in Figur 1 gezeigten industriellen Netzwerk 1 kann dann neben dem ersten Netzknoten 111 des ersten Segments 10 als erster Netzwerkverteiler ferner der dritte Netzknoten 113 des ersten Segments 10 als zweiter Netzwerkverteiler und der sechste Netzknoten 121 des zweiten Segments 20 als dritter Netzwerkverteiler zur Laufzeitmessung der jeweiligen Segment-Nachrichten verwendet werden.

Bei einer solchen Vorgehensweise besteht die Möglichkeit, die Laufzeitmessungen der einzelnen Netzwerkverteiler miteinander in Beziehung zu setzen, um eine Laufzeit-Matrix zu erstellen. Dies kann durch den Laufzeit-Überwachungsnetzknoten beispielsweise den Steuerknoten erfolgen, der die Return-Zeiten aus den die Zeitbestimmung ausführenden Netzknoten im industriellen Netzwerk ausliest und die Laufzeit-Matrix bildet. Der Laufzeit-Überwachungsnetzknoten kann durch entsprechende Auswertung der so erzeugten Laufzeit-Matrix erkennen, ob und wo ein oder mehrere zusätzliche Netzknoten eingefügt wurden.

Das kann durch Vergleichen der ermittelten Laufzeiten mit Schwellenwerten, die jeweils den für den Laufzeitabschnitt zu erwartenden maximalen Laufzeitwert angeben, erfolgen. Es besteht auch die Möglichkeit, zeitlich nacheinander erzeugte Laufzeitmatrizen miteinander zu vergleichen und als Schwellenwert maximal zulässige Veränderungen in der Laufzeit festzulegen.

Die Anzahl der Netzknoten, die jeweils die Zeit zwischen dem Aussenden einer Nachricht und einer Rückkehr der Nachricht messen, kann abhängig von den Betriebsbedingungen des Netzwerkes bestimmt werden.

Mit dieser Vorgehensweise kann auch das Anfügen weiterer Netzknoten am Ende eines Segments oder an einer ungenutzten Schnittstelle eines Netzknotens erkannt werden. Das ist aber weniger relevant, weil das Anfügen durch die Auswertung des Verbindungsstatus der Schnittstelle durch den Netzknoten ohnehin erfasst wird. In geschützten Umgebungen kann ferner durch die Deaktivierung der ungenutzten Schnittstellen ausgelöst beispielsweise durch den Netzknoten selbst oder durch den Steuerknoten im industriellen Netzwerk effektiv verhindert werden, dass unerwünschter Weise ein Netzknoten angefügt wird.

Um eine verbesserte Überwachung zu erreichen, kann der Schwellenwert, dessen Überschreiten als Hinweis auf einen nachträglich in die Netzwerktopologie eingefügten Netzknoten gewertet wird, mit Umgebungsparametern wie einer Umgebungstemperatur und / oder Betriebsparametern wie einer Betriebszeit des industriellen Netzwerkes korreliert werden. So ist, wie vorstehend erläutert, die Durchleitungsverzögerungen bei Netzknoten und damit die Laufzeit temperaturabhängig. Dies gilt auch für die Leitungsstruktur zwischen den Netzknoten. Auch kann eine Betriebspause zu einer Abkühlung führen, die dann einen Einfluss auf die Laufzeitmessung hat. Durch das Korrelieren mit dem Schwellenwert können Fehlalarme verhindert werden.

Um eine verbesserte Überwachung durchzuführen, kann ferner vorgesehen sein, jeweils eine Mehrzahl von Laufzeitmessung durchzuführen, um dann eine gemittelte Laufzeit zu bestimmen.

## Patentansprüche

1. Verfahren zum Erkennen einer Änderung in einer Topologie eines industriellen Netzwerkes, das aus einer Anordnung von Netzknoten besteht, die miteinander verbunden sind,

   wobei eine Mehrzahl von Netzknoten die Laufzeiten von Nachrichten im industriellen Netzwerk ermittelt, in dem die Zeit zwischen dem Aussenden einer Nachricht und der Rückkehr der Nachricht gemessen wird, wobei die Mehrzahl abhängig von den Betriebsbedingungen des Netzwerkes bestimmt wird,
   wobei, wenn die ermittelte Laufzeit oder eine Laufzeitänderung einen vorgegebenen Schwellenwert überschreitet, das als Hinweis auf einen nachträglich in die Netzwerktopologie eingefügten Netzknoten gewertet und ein Sicherheitsmodus aktiviert wird.

2. Verfahren nach Anspruch 1, wobei ein Laufzeit-Überwachungsnetzknoten die ermittelte Laufzeit aus dem Netzknoten ausliest und bestimmt, ob die ausgelesene Laufzeit den vorgegebenen Schwellenwert überschreitet.

3. Verfahren nach Anspruch 2, wobei der Laufzeit-Überwachungsnetzknoten ein Steuerknoten im industriellen Netzwerk ist, der einen Datentransfer im industriellen Netzwerk bestimmt.

4. Verfahren nach Anspruch 2 oder 3, wobei eine Mehrzahl von Netzknoten Laufzeitmessungen durchführen und der Laufzeit-Überwachungsnetzknoten die Laufzeitmessungen der einzelnen Netzknoten miteinander in Beziehung setzt, um eine Laufzeit-Matrix zu erstellen und durch Auswertung der Laufzeit-Matrix zu erkennen, ob und wo ein oder mehrere zusätzliche Netzknoten eingefügt wurden.

5. Verfahren nach einem der Ansprüche 1 bis 4, wobei der Sicherheitsmodus eine Warninformation umfasst, die quittiert werden kann, um den Sicherheitsmodus zu beenden.

6. Verfahren nach einem der Ansprüche 1 bis 5, wobei der Schwellenwert mit einem Umgebungsparameter, insbesondere der Umgebungstemperatur korreliert wird.

7. Verfahren nach einem der Ansprüche 1 bis 6, wobei der Schwellenwert mit einem Betriebsparameter, insbesondere einer Betriebszeit korreliert wird.

8. Verfahren nach einem der Ansprüche 1 bis 7, wobei der Netzknoten zum Bestimmen der Laufzeit ein erster Netzknoten ist, der die Laufzeit der Nachrichten zu einem verbundenen zweiten Netzknoten mit Hilfe des Precision Time Protocol misst.

9. Verfahren nach einem der Ansprüche 1 bis 8, wobei ein Netzknote, der die Zeit zwischen dem Aussenden einer Nachricht und der Rückkehr der Nachricht misst, der erste Netzknoten nach dem Steuerknoten in der Netzwerktopologie ist.

## Claims

1. A method for detecting a change in a topology of an industrial network which consists of an arrangement of network nodes which are connected to one another,

> wherein a plurality of network nodes determines the runtimes of messages in the industrial network by measuring the time between transmitting a message and the return of the message, the plurality of which being determined depending on the operational conditions of the network, wherein, if the determined propagation time or a propagation time change exceeds a predetermined threshold value, this is evaluated as an indication of a network node subsequently inserted into the network topology and a security mode is activated.

2. The method according to claim 1, wherein a runtime monitoring network node reads out the determined runtime from the network node and determines whether the read-out runtime exceeds the predetermined threshold value.

3. The method according to claim 2, wherein the runtime monitoring network node is a control node in the industrial network that determines a data transfer in the industrial network.

4. The method according to claim 2 or 3, wherein a plurality of network nodes carry out runtime measurements and the runtime monitoring network node relates the runtime measurements of the individual network nodes to one another in order to create a runtime matrix and, by evaluating the runtime matrix, to recognize whether and where one or a plurality of additional network nodes have been inserted.

5. The method according to any one of claims 1 to 4, wherein the safety mode comprises a warning information that may be acknowledged in order to terminate the safety mode.

6. The method according to any one of claims 1 to 5, wherein the threshold value is correlated with an ambient parameter, in particular the ambient temperature.

7. The method according to any one of claims 1 to 6, wherein the threshold value is correlated with an operating parameter, in particular an operating time.

8. The method according to any one of claims 1 to 7, wherein the network node for determining the propagation time is a first network node which measures the propagation time of the messages to a connected second network node using the Precision Time Protocol.

9. The method according to any one of claims 1 to 8, wherein a network node that measures the time between the sending of a message and the return of the message is the first network node after the control node in the network topology.

## Revendications

1. Procédé destiné à identifier un changement de topologie d'un réseau industriel, qui est constitué d'un ensemble de nœuds de réseau qui sont connectés les uns aux autres ;

> une multitude de nœuds de réseau déterminant les temps de transit de message dans le réseau industriel, dans lequel le temps entre l'envoi d'un message et le retour du message est mesuré, la multitude étant définie en fonction des conditions de fonctionnement du réseau, le dépassement d'une valeur de seuil prédéfinie par le temps de transit déterminé ou un changement du temps de transit étant évalué comme l'indication qu'un nœud de réseau a été inséré ultérieurement dans la topologie de réseau et un mode de sécurité étant activé.

2. Procédé selon la revendication 1, un nœud de réseau de surveillance de temps de transit lisant le temps de transit déterminé du nœud de réseau et définissant si le temps de transit lu dépasse la valeur de seuil prédéfinie.

3. Procédé selon la revendication 2, le nœud de réseau de surveillance de temps de transit étant un nœud de commande dans le réseau industriel, qui définit un transfert de données dans le réseau industriel.

4. Procédé selon la revendication 2 ou 3, une multitude de nœuds de réseau effectuant des mesures de temps de transit et le nœud de réseau de surveillance de temps de transit mettant en corrélation entre elles les mesures de temps de transit des divers nœuds de réseau pour créer une matrice de temps de transit et identifier grâce à l'évaluation de la matrice de temps de transit si un ou plusieurs nœuds de réseau supplémentaires ont été insérés.

5. Procédé selon l'une des revendications 1 à 4, le mode de sécurité comprenant une information d'avertissement, qui doit être confirmée pour mettre fin au mode de sécurité.

6. Procédé selon l'une des revendications 1 à 5, la valeur de seuil étant corrélée avec un paramètre d'environnement, en particulier une température ambiante.

7. Procédé selon l'une des revendications 1 à 6, la valeur de seuil étant corrélée avec un paramètre de fonctionnement, en particulier un temps de fonctionnement.

8. Procédé selon l'une des revendications 1 à 7, le nœud de réseau destiné à définir le temps de transit étant un premier nœud de réseau qui mesure le temps de transit des messages vers un deuxième nœud de réseau connecté à l'aide du protocole PTP (Precision Time Protocol).

9. Procédé selon l'une des revendications 1 à 8, un nœud de réseau, qui mesure le temps entre l'envoi d'un message et le retour du message, étant le premier nœud de réseau après le nœud de commande dans la topologie de réseau.

Fig. 1

EP 4 612 852 B1

1

10

20

30

40

101

100 111

100 112

100 113

100 114

100 115

100 121

100 122

100 123

100 124

100 131

100 132

100 133

100 141

100 142

100 143

**Fig. 2**

100A

100B

t1

t_delay=((t4-t1)-(t3-t2))/2

t2

t4-t1

t3-t2

t3

t4

EP 4 612 852 B1

# EP 4 612 852 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 11165802 B2
- EP 3734930 A1